# EUROPÄISCHE PATENTSCHRIFT

(11) **EP 2 562 057 B1**
(45) Veröffentlichungstag und Bekanntmachung des Hinweises auf die Patenterteilung: **29.07.2015**
(21) Anmeldenummer: 12178962.2
(22) Anmeldetag: 02.08.2012
(51) Int. Cl.: B60S 9/02

(54) **Stützvorrichtung für einen Sattelanhänger, mit einem Stützfuß und wenigstens einer Abdeckeinrichtung für diesen Stützfuß**
Dispositif d'appui pour un semi-remorque, avec un pied de support et au moins un dispositif de recouvrement pour ce pied de support
Support device for a semi-trailer with a support base and at least one cover device for this support base

(30) Priorität: 22.08.2011 DE 102011081338
(43) Veröffentlichungstag der Anmeldung: 27.02.2013
(73) Patentinhaber: SAF-HOLLAND GmbH, 63856 Bessenbach (DE)
(72) Erfinder: Weber, Elmar, 48249 Dülmen (DE)
(74) Vertreter: Müller Schupfner & Partner Patent- und Rechtsanwaltspartnerschaft mbB

(56) Entgegenhaltungen:
- DE-A1- 3 642 079
- DE-B2- 2 609 631
- DE-C1- 3 604 596

## Beschreibung

Die Erfindung betrifft eine Stützvorrichtung für einen Sattelanhänger bzw. Sattelauflieger oder dergleichen mit einem Stützrohr, einem Stützfuß und einer Abdeckeinrichtung.

Stützvorrichtungen der betreffenden Art sind meist paarweise (Stützenpaar) im vorderen Bereich am Rahmen eines Sattelanhängers angeordnet und kommen dann zum Einsatz, wenn der Sattelanhänger von der Sattelzugmaschine abgekoppelt und getrennt abgestellt werden soll. Derartige Systeme sind insbesondere in DE 10 2009 001 288 A1 und DE 10 2009 001 299 A1 derselben Anmelderin dargestellt.

Die Stützvorrichtungen weisen ein zumeist mehrteiliges Stützrohr auf, an dessen unterem Ende ein in der Regel höhenverstellbarer Stützfuß angeordnet ist. Der Stützfuß umfasst ein an der unteren Stirnseite des Stützrohrs befestigtes Abrollsegment (Ausgleichssegment) und eine Aufstandsplatte (Fußelement bzw. Fußplatte) mit einem Abrollbereich für das Abrollsegment. Bei längeren Abstellzeiten kann sich somit der Sattelanhänger vorwärts oder rückwärts bewegen, ohne dass es zu einer übermäßigen Biege- und/oder Knickbeanspruchung der Stützvorrichtungen kommt.

Die DE 36 42 079 A1 betrifft eine höhenverstellbare Stütze für Sattelanhänger, wobei am unteren Ende des ausfahrbaren Stützenteils ein um eine horizontale Achse schwenkbares Lagerteil für eine Fußplatte vorgesehen ist und wobei an einem Rollsegment eine Manschette befestigt ist, welche die Fußplatte der Stütze trägt.

Die DE 36 04 596 C1 betrifft eine höhenverstellbare Stütze für Sattelanhänger, die durch Gelenk- oder Drehlagerteile gelenkig bzw. schwenkbar mit dem ausfahrbaren Stützenteil verbunden ist.

Die Stützfüße der Stützvorrichtungen befinden sich im Fahrbetrieb im Spritzbereich der Hinterräder der Sattelzugmaschine und sind somit Spritzwasser, Schleuderdreck, Steinschlag und dergleichen ausgesetzt. Dies kann zu Verschmutzungen führen, die regelmäßig zu entfernen sind. Ferner kann es zu unerwünschten Verschleppungen von Dreck, Matsch, Steinen und dergleichen aus einem Gelände (bspw. Baustellengelände) auf die Straße kommen. Dies stellt eine Gefahr für den Straßenverkehr dar.

Es ist daher eine Aufgabe der vorliegenden Erfindung, eine Stützvorrichtung für einen Sattelanhänger oder dergleichen vorzusehen, die eine verbesserte Betriebssicherheit aufweist.

Diese Aufgabe wird durch eine Stützvorrichtung für einen Sattelanhänger oder dergleichen mit den Merkmalen des Anspruchs 1 gelöst. Die vom Anspruch 1 abhängigen Ansprüche betreffen bevorzugte Ausgestaltungen und Weiterbildungen der erfindungsgemäßen Stützvorrichtung.

Erfindungsgemäß ist eine Stützvorrichtung für einen Sattelanhänger oder dergleichen vorgesehen, umfassend ein Stützrohr und einen am Stützrohr angeordneten Stützfuß, wobei der Stützfuß ein am Stützrohr angeordnetes Ausgleichselement und eine Aufstandsplatte mit einem Tragbereich für das Ausgleichselement aufweist, und wobei wenigstens eine an der Stützvorrichtung angeordnete Abdeckeinrichtung vorgesehen ist, die das Ausgleichselement und/oder den Tragbereich der Aufstandsplatte zumindest teilweise überdeckt. Das Ausgleichselement kann als Abrollsegment oder Gleitelement ausgebildet sein, welches auf einem Tragbereich - z. B. einem Abrollbereich oder Gleitbereich - der Aufstandsplatte verlagerbar bzw. abrollbar bzw. gleitbar ist. Es ist wenigstens eine an der Stützvorrichtung angeordnete Abdeckeinrichtung vorgesehen, die (im Fahrbetrieb) das Ausgleichselement bzw. Abrollsegment und/oder den Tragbereich bzw. Abrollbereich der Aufstandsplatte zumindest teilweise abdeckt und vor Spritzwasser, Steinschlag und/oder dergleichen schützt. Das Stützrohr kann einteilig oder mehrteilig ausgebildet sein. Bevorzugt handelt es sich um ein teleskopierbares Stützrohr, wobei der Stützfuß am unteren Stützrohrteil oder am Innenstützrohr angeordnet ist. Die Befestigung des Stützfußes erfolgt im Wesentlichen über das Ausgleichselement bzw. Abrollsegment, das direkt oder indirekt an der unteren Stirnseite eines unteren Stützrohrteils oder eines Innenstützrohrs befestigt ist. Bevorzugt ist das Ausgleichselement bzw. Abrollsegment verschwenkbar befestigt. Das Ausgleichselement bzw. Abrollsegment weist bevorzugt einen bogenförmigen Abrollabschnitt auf. Bei der Aufstandsplatte handelt es sich um ein im Wesentlichen flächiges Bauteil, das eine Aufstandsfläche und einen der Aufstandsfläche gegenüberliegenden Tragbereich bzw. Abrollbereich für das Ausgleichselement (bzw. dessen Abrollabschnitt) aufweist. Der Tragbereich ist hierbei insbesondere derjenige Bereich bzw. diejenige Oberfläche der Aufstandsplatte, welche(n) das Ausgleichselement (bzw. dessen Abrollabschnitt) bei einer Ausgleichsbewegung (d. h. einem Positionsversatz des Sattelanhängers) berührt bzw. kontaktiert. Das Ausgleichselement und die Aufstandsplatte sind in bekannter Weise miteinander verbunden. Die Abdeckeinrichtung für die Abdeckung und den Schutz des Ausgleichselements und/oder des Tragbereichs kann einteilig oder mehrteilig ausgebildet sein. Bevorzugt ist die Abdeckeinrichtung direkt im Bereich des Stützfußes an der Stützvorrichtung angeordnet, was hinsichtlich der Höhenverstellbarkeit des Stützfußes von Vorteil ist. In einer einfachen Ausführungsmöglichkeit kann es sich bei der Abdeckeinrichtung um ein Schutzblech (aus einem Metallmaterial oder ggf. auch aus einem Kunststoffmaterial) handeln, das am Stützfuß und/oder am Stützrohr befestigt ist. Die vorgeschlagene Abdeckeinrichtung (wobei auch mehrere Abdeckeinrichtungen vorgesehen sein können, wie nachfolgend noch näher erläutert), schützt den Stützfuß und insbesondere das Ausgleichselement bzw. Abrollsegment und/oder den Tragbereich bzw. Abrollbereich der Aufstandsplatte im Fahrbetrieb vor Spritzwasser und/oder Steinschlag. Die eingangs genannten Nachteile an herkömmlichen Stützvorrichtungen treten somit bei der erfindungsgemäßen Stützvorrichtung nicht auf. Ein weiterer Vorteil der vorgeschlagenen Abdeckeinrichtung ist auch darin zu sehen, dass an der erfindungsgemäßen Stützvorrichtung im Fahrbetrieb deutlich weniger Luftverwirbelungen (im Vergleich zu herkömmlichen Stützvorrichtungen) auftreten, wodurch vor allem Fahrgeräusche reduziert werden.

Vorteilhafterweise ist die Abdeckeinrichtung aus einem rückstellfähigen Material ausgebildet und zweckmäßigerweise derart an der Stützvorrichtung festgelegt, dass diese die Aufstandsplatte in eine neutrale Ausgangslage rückstellt. Besonders bevorzugt ist vorgesehen, dass die Abdeckeinrichtung bzw. die Planen oder gegebenenfalls die offenen Faltenbälge aus einem elastischen Material gebildet sind, worüber beim Anheben oder Einfahren der Stützvorrichtung ein selbsttätiges Rückstellen der Aufstandsplatte (relativ zum Ausgleichselement bzw. Abrollsegment und/oder Stützrohr) in eine neutrale Ausgangslage bewerkstelligt werden kann. Dies wird nachfolgend anhand der Figur noch näher erläutert. Ein solches selbsttätiges bzw. automatisches Rückstellen kann bei geeigneter Ausgestaltung ebenso auch mit einem geschlossenen Faltenbalg oder mit einer schlauchförmigen Plane bewerkstelligt werden.

Erfindungsgemäß ist die Abdeckeinrichtung am Stützrohr und an der Aufstandsplatte befestigt. Hierbei kann die Abdeckeinrichtung - in Fahrtrichtung gesehen - vorne und hinten am Stützrohr und/oder vorne und hinten an der Aufstandsplatte festgelegt sein. Eine jeweilige seitliche Befestigung am Stützrohr und/oder an der Aufstandsplatte ist ebenfall zusätzlich oder alternativ möglich.

Zweckmäßigerweise sind zur Befestigung der Abdeckeinrichtung Knüpfhaken am Stützrohr und/oder an der Aufstandsplatte vorgesehen.

Erfindungsgemäß ist das Ausgleichselement über ein Schwenkgelenk schwenkbar am Stützrohr befestigt, wobei die Abdeckeinrichtung auch dieses Schwenkgelenk zumindest teilweise überdeckt. Die vorgeschlagene Abdeckeinrichtung dient somit auch dem Schutz des Schwenkgelenks für das Ausgleichselement.

In einer ersten Ausführungsvariante ist eine einzelne Abdeckeinrichtung vorgesehen, die das Ausgleichselement und/oder den Tragbereich der Aufstandsplatte im Wesentlichen vollständig umschließt oder abdeckt. In anderen Worten kann die einzelne Abdeckeinrichtung den Stützfuß im Wesentlichen vollständig umschliessen. Diese Abdeckeinrichtung kann, wie bereits vorausgehend erläutert, einteilig oder mehrteilig ausgebildet sein. Besonders bevorzugt ist vorgesehen, dass es sich bei dieser Abdeckeinrichtung um einen umseitig geschlossenen Faltenbalg oder um eine schlauchförmige Plane handelt, der bzw. die den Stützfuß und insbesondere den Bereich des Ausgleichselements und des Tragbereichs der Aufstandsplatte stulpenartig umschließt. Der Faltenbalg oder die schlauchförmige Plane kann oben (d. h. mit ihrem oberen Ende) am Außenumfang des Stützrohrs und unten (d. h. mit ihrem unteren Ende) an einem Randabschnitt der Aufstandsplatte befestigt sein. Die Arretierung kann z. B. durch eine Spannschelle oder dergleichen erfolgen. Eine weitere bevorzugte Befestigungsmöglichkeit wird nachfolgend noch näher erläutert.

In einer zweiten Ausführungsvariante sind eine Vielzahl, vorzugsweise zwei Abdeckeinrichtungen vorgesehen sind, die das Ausgleichselement und/oder den Tragbereich der Aufstandsplatte zumindest teilweise überdecken. Es können somit zwei Abdeckeinrichtungen vorgesehen sein, die den Stützfuß und insbesondere den Bereich des Ausgleichselements und des Tragbereichs der Aufstandsplatte bezüglich der Fahrtrichtung im Fahrbetrieb nach vorne und nach hinten abdecken. Es kann somit eine erste Abdeckeinrichtung vorgesehen sein, die den Stützfuß, zweckmäßigerweise dessen Ausgleichselement und/oder Tragbereich der Aufstandsplatte, in Fahrtrichtung vorne, d. h. vor der Symmetrieachse überdeckt. Analog kann eine zweite Abdeckeinrichtung vorgesehen sein, die den Stützfuß, zweckmäßigerweise dessen Ausgleichselement und/oder Tragbereich der Aufstandsplatte, in Fahrtrichtung hinten, d. h. hinter der Symmetrieachse überdeckt. Auch diese Abdeckeinrichtungen können einteilig oder mehrteilig ausgebildet sein. Bevorzugt ist vorgesehen, dass es sich bei den Abdeckeinrichtungen um zwei Planen handelt. Alternativ können diese Abdeckeinrichtungen auch als offene Faltenbälge ausgebildet sein. Die Planen können oben am Stützrohr und unten an der Aufstandsplatte befestigt sein.

Besonders bevorzugt erfolgt dieses Befestigen durch ein Einknüpfen, wozu an den Planen geeignete Ösen, Verdickungen oder dergleichen und an dem Stützrohr sowie an der Aufstandsplatte korrespondierende Einknüpfhaken oder Klemmhaken vorgesehen sein können.

Unter einer Plane wird zweckmäßigerweise ein tuchartiges Material mit biegeschlaffen Eigenschaften verstanden, das bspw. aus einem Textilgewebe, einem Kautschukmaterial, einem Kunststoffmaterial bzw. synthetischen Material (insbesondere einem synthetischen Elastomermaterial) oder einem Verbundmaterial besteht. Bevorzugt ist vorgesehen, dass die Plane elastische Eigenschaften aufweist, wie nachfolgend noch näher erläutert. Der Faltenbalg kann aus einem Kunststoffmaterial oder aus einem Textilmaterial bestehen.

Die Erfindung wird nachfolgend anhand einer Figur beispielhaft und in nicht einschränkender Weise näher erläutert.

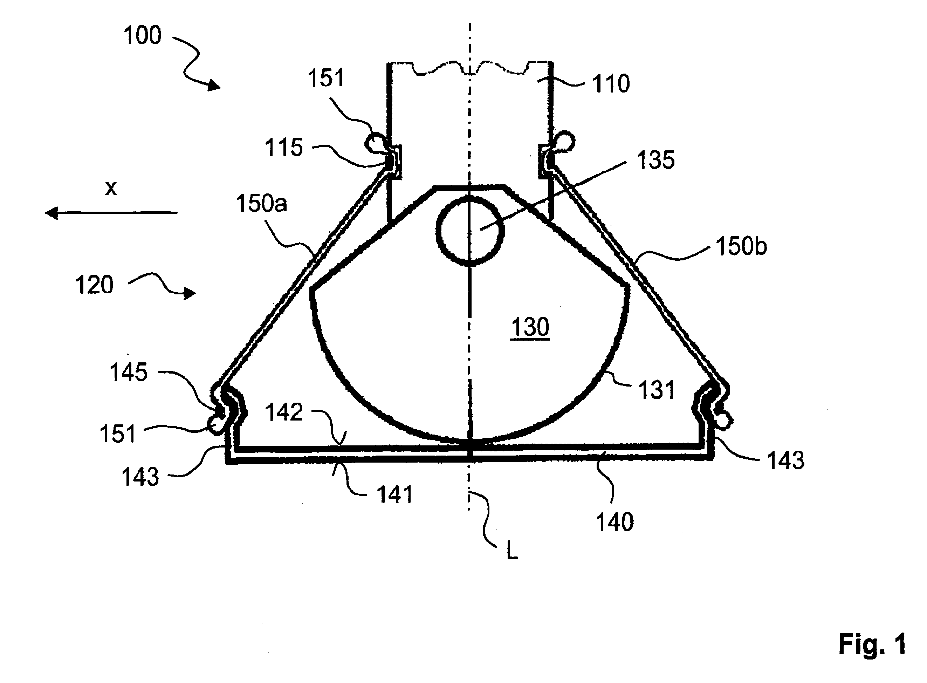

- Fig. 1: zeigt in einer schematischen Seitenansicht den Fußbereich einer bevorzugten Ausführungsform der erfindungsgemäßen Stützvorrichtung.

Fig. 1 zeigt den unteren Bereich bzw. Fußbereich einer erfindungsgemäßen Stützvorrichtung 100 für einen Sattelanhänger oder dergleichen. Die Stützvorrichtung 100 umfasst ein Stützrohr 110 an dem ein Stützfuß 120 angeordnet ist. Der Stützfuß 120 weist ein Ausgleichselement bzw. Abrollsegment 130 und eine Aufstandsplatte 140 auf. Das Ausgleichselement 130 ist mit einem Schwenkgelenk 135 verschwenkbar am Stützrohr 110, wobei es sich insbesondere um eine teleskopierbares Innenstützrohr handelt, befestigt. Das Ausgleichselement 130 weist einen mit 131 bezeichneten bogenförmigen Abrollabschnitt auf. Die Aufstandsplatte 140 weist eine Aufstandsfläche 141 und einen der Aufstandsfläche 141 gegenüberliegenden Tragbereich bzw. Abrollbereich 142 für das Ausgleichselement 130 bzw. dessen Abrollabschnitt 131 auf. Mit 143 sind an der Aufstandsplatte 140 ausgebildete hochgezogene Randabschnitte bezeichnet, die gemäß der normalen Fahrtrichtung x (des Sattelanhängers) eine vordere Kante und eine hintere Kante der Aufstandsplatte 140 ausbilden. Der Stützfuß 120 ist bezüglich der gezeigten Seitenansicht symmetrisch ausgebildet. Mit L ist die Symmetrieachse bezeichnet, die gleichfalls auch der Bewegungsachse des Stützfußes 120 beim Anheben oder Absenken entspricht.

Beim längeren Abstellen des Sattelanhängers kann es, bspw. infolge eines Entweichens von Druckluft aus einem Luftfedersystem, zu einer Vorwärts- oder Rückwärtsbewegung des Sattelanhängers kommen. Zum Ausgleich einer solchen Vorwärts- oder Rückwärtsbewegung kann das schwenkbar gelagerte Ausgleichselement 130 auf dem Tragbereich 142 der ortsfest auf dem Untergrund aufstehenden Aufstandsplatte 140 abrollen, wodurch eine übermäßige Biege- und/oder Knickbeanspruchung der Stützvorrichtung 100 vermieden wird.

Der Stützfuß 120 ist im Fahrbetrieb aufgewirbeltem Spritzwasser und Schleuderdreck, sowie Steinschlag und dergleichen ausgesetzt. Um den Stützfuß 120 und insbesondere das Ausgleichselement 130 (bzw. vornehmlich dessen Abrollabschnitt 131) und den Tragbereich 142 der Aufstandsplatte 140 hiervor zu schützen sind zwei Abdeckungen 150a und 150b vorgesehen, die den Stützfuß 120 bezüglich der Fahrtrichtung x quasi zeltartig nach vorne und nach hinten abdecken. Die Abdeckungen 150a und 150b sind als Planen (wie obenstehend erläutert) ausgebildet, die oben an der Außenseite des Stützrohrs 110 und unten an den hochgezogenen Randabschnitten 143 der Aufstandsplatte 140 befestigt sind. Die Abdeckungen bzw. Planen 150a und 150b überdecken auch das Schwenkgelenk 135 und dienen somit auch als dessen Schutz.

Zur Befestigung der Planen 150a und 150b sind am Stützrohr 110 und an der Aufstandsplatte 140 Einknüpfhaken oder Klemmhaken 115 und 145 in Kombination mit Kulissenführungen ausgebildet. Korrespondierend hierzu sind die Planen 150a und 150b mit randseitigen Verdickungen 151 ausgebildet, die die Einknüpfhaken 115 und 145 formschlüssig hintergreifen. Alternativ können auch Ösen oder dergleichen an den Planen 150a und 150b vorgesehen sein. Diese Befestigungselemente sind bevorzugt auch im Hinblick auf hohe Zugkräfte und/oder Rückstellkräfte in den Planen 150a und 150b ausgelegt (wie nachfolgend noch näher erläutert).

Bevorzugt ist vorgesehen, dass die Planen 150a und 150b aus einem elastischen Material gebildet sind. Beim Abrollen des Ausgleichselements 130 auf dem Tragbereich 142 der ortsfest auf dem Untergrund aufstehenden Aufstandsplatte 140 kommt es (abhängig von der Abrollrichtung) zu einer elastischen Dehnung einer der beiden Planen 150a oder 150b, wobei sich die andere Plane 150b oder 150a faltenfrei zusammenziehen kann. Wird der Stützfuß 120 aus einem solchen Zustand heraus angehoben, können die elastischen Zugkräfte in der gedehnten Plane 150a oder 150b eine Rückstellung der Aufstandsplatte 140 in eine neutrale Ausgangslage (wie in Fig. 1 gezeigt) bewerkstelligen, wobei auch das Ausgleichselement 130 wieder in die neutrale Ausgangslage (wie in Fig. 1 gezeigt) gebracht werden kann. Diese neutrale Ausgangslage ist durch ein Kräftegleichgewicht in den Planen 150a und 150b gekennzeichnet, wofür auch die symmetrische Ausbildung des Stützfußes 120 von Vorteil ist. Um eine ausreichende Rückstellkraft zu erhalten, weisen die Planen 150a und 150b steile Federkennlinien (Kraft über Weg) auf. Die aus dem Stand der Technik bekannten Federelemente zur Rückstellung (wie bspw. in dem eingangs genannten Stand der Technik gezeigt) können somit möglicherweise entfallen oder kleiner dimensioniert werden.

Bei der in Fig. 1 gezeigten Ausführungsvariante ist der Stützfuß 120 nach vorne und nach hinten durch die Abdeckungen 150a und 150b geschützt. Ebenso kann auch nur eine einzelne vordere Abdeckung 150a vorgesehen sein, die einen Minimalschutz gewährleisten kann. Ferner ist eine Ausführungsvariante mit einer Abdeckung denkbar, die den Stützfuß 120 vollständig umschließt und diesen rundherum, d. h. auch in seitlicher Richtung, schützt. Eine solche Abdeckung könnte z. B. als Faltenbalg oder schlauchförmige Plane ausgebildet sein, wie obenstehend erläutert.

## Patentansprüche

1. Stützvorrichtung (100) für einen Sattelanhänger oder dergleichen, umfassend ein Stützrohr (110) und einen am Stützrohr (110) angeordneten Stützfuß (120),
wobei der Stützfuß (120) ein am Stützrohr (110) angeordnetes Ausgleichselement (130) und eine Aufstandsplatte (140) mit einem Tragbereich (142) für das Ausgleichselement (130) aufweist,
wobei wenigstens eine an der Stützvorrichtung (100) angeordnete Abdeckeinrichtung (150a; 150b) vorgesehen ist, die das Ausgleichselement (130) und/oder den Tragbereich (142) der Aufstandsplatte (140) zumindest teilweise überdeckt,
wobei das Ausgleichselement (130) über ein Schwenkgelenk (135) schwenkbar am Stützrohr (110) befestigt ist, und wobei die Abdeckeinrichtung (150a; 150b) auch dieses Schwenkgelenk (135) zumindest teilweise überdeckt, und
wobei die Abdeckeinrichtung (150a, 150b) am Stützrohr (110) und an der Aufstandsplatte (140) befestigt ist.

2. Stützvorrichtung nach Anspruch 1, wobei die Abdeckeinrichtung (150a, 150b) aus einem rückstellfähigen Material ausgebildet und zweckmäßigerweise derart an der Stützvorrichtung (100) festgelegt ist, dass diese die Aufstandsplatte (140) in eine neutrale Ausgangslage rückstellt.

3. Stützvorrichtung nach einem der vorhergehenden Ansprüche, wobei zur Befestigung der Abdeckeinrichtung (150a, 150b) Knüpfhaken (115, 145) am Stützrohr (110) und/oder an der Aufstandsplatte (140) vorgesehen sind.

4. Stützvorrichtung nach einem der vorhergehenden Ansprüche, wobei eine einzelne Abdeckeinrichtung vorgesehen ist, die das Ausgleichselement (130) und/oder den Tragbereich (142) der Aufstandsplatte (140) im Wesentlichen vollständig umschließt.

5. Stützvorrichtung nach einem der Ansprüche 1 - 3, wobei eine Vielzahl, vorzugsweise zwei Abdeckeinrichtungen (150a, 150b) vorgesehen sind, die das Ausgleichselement (130) und/oder den Tragbereich (142) der Aufstandsplatte (140) zumindest teilweise überdecken.

6. Stützvorrichtung nach einem der vorhergehenden Ansprüche, wobei die Abdeckeinrichtung (150a; 150b) als Faltenbalg oder schlauchförmige Plane ausgebildet ist.

7. Stützvorrichtung nach einem der vorhergehenden Ansprüche, wobei die Abdeckeinrichtung (150a, 150b) aus einem Textilgewebe, einem Kautschukmaterial, einem synthetischen Material oder einem Verbundmaterial ausgebildet ist.

## Claims

1. A supporting device or landing gear (100) for a semi-trailer or the like, comprising a supporting tube (110) and a supporting foot (120) arranged on the supporting tube (110),
wherein the supporting foot (120) comprises a compensation element (130) arranged on the supporting tube (110) and a contact plate (140) having a support portion (142) for the compensation element (130),
wherein there is provided at least one covering device (150a; 150b) arranged on the supporting device (100), which at least partially covers or overlaps the compensation element (130) and/or the support portion (142) of the contact plate (140).
wherein the compensation element (130) is pivotably attached at the supporting tube (110) via a swivel joint (135), and wherein the covering device (150a; 150b) at least partially covers or overlaps this swivel joint (135) as well, and wherein the covering device (150a; 150b) is attached at the supporting tube (110) and at the contact plate (140).

2. The supporting device of claim 1, wherein the covering device (150a; 150b) is made from a resilient material and expediently fixed to the supporting device (100) such that the covering device returns or resets the contact plate (140) into a neutral starting position.

3. The supporting device of any one of the previous claims, wherein for attaching the covering device (150a; 150b) there are provided latch hooks (115, 145) on the supporting tube (110) and/or on the contact plate (140).

4. The supporting device of any one of the preceding claims, wherein there is provided a single covering device, which essentially entirely encases the compensation element (130) and/or the support portion (142) of the contact plate (140).

5. The supporting device of any one of claims 1 - 3, wherein there are provided a plurality of, preferably two covering devices (150a; 150b), which at least partially cover or overlap the compensation element (130) and/or the support portion (142) of the contact plate (140).

6. The supporting device of any one of the preceding claims, wherein the covering device (150a; 150b) is configured as a bellows or tube-shaped tarpaulin.

7. The supporting device of any one of the preceding claims, wherein the covering device (150a; 150b) is made from a textile material, a caoutchouc or rubber material, a synthetic material or a composite material.

## Revendications

1. Dispositif d'appui (100) pour un semi-remorque ou similaire, comprenant un tube d'appui (110) et un pied d'appui (120) agencé sur le tube d'appui (110),
dans lequel le pied d'appui (120) comprend un élément de compensation (130) agencé sur le tube d'appui (110) et une plaque de base (140) avec une zone portante (142) pour l'élément de compensation (130),
dans lequel il est prévu au moins un dispositif de recouvrement (150a ; 150b) agencé sur le dispositif d'appui (100), qui recouvre au moins partiellement l'élément de compensation (130) et/ou la zone portante (142) de la plaque de base (140),
dans lequel l'élément de compensation (130) est fixé de manière pivotante sur le tube d'appui (130) via une articulation pivotante (135), et dans lequel le dispositif de recouvrement (150a ; 150b) recouvre au moins partiellement également cette articulation pivotante (135), et
dans lequel le dispositif de recouvrement (150a, 150b) est fixé sur le tube d'appui (110) et sur la plaque de base (140).

2. Dispositif d'appui selon la revendication 1, dans lequel le dispositif de recouvrement (150a, 150b) est réalisé en un matériau capable de retrait et est judicieusement immobilisé sur le dispositif d'appui (100) de telle façon que celui-ci rappelle la plaque de base (140) jusque dans une position de départ neutre.

3. Dispositif d'appui selon l'une des revendications précédentes, dans lequel il est prévu des crochets d'attache (115, 145) sur le tube d'appui (110) et/ou sur la plaque de base (140) pour la fixation du dispositif de recouvrement (150a, 150b).

4. Dispositif d'appui selon l'une des revendications précédentes, dans lequel il est prévu un unique dispositif de recouvrement, qui enferme sensiblement entièrement l'élément de compensation (130) et/ou la zone portante (142) de la plaque de base (140).

5. Dispositif d'appui selon l'une des revendications 1 à 3, dans lequel il est prévu une pluralité, de préférence deux, dispositifs de recouvrement (150a, 150b), qui recouvrent au moins partiellement l'élément de compensation (130) et/ou la zone portante (142) de la plaque de base (140).

6. Dispositif d'appui selon l'une des revendications précédentes, dans lequel le dispositif de recouvrement (150a ; 150b) est réalisé sous forme de soufflet plissé ou de bâche de forme tubulaire.

7. Dispositif d'appui selon l'une des revendications précédentes, dans lequel le dispositif de recouvrement (150a, 150b) est réalisé en un matériau textile, un matériau en caoutchouc, un matériau synthétique ou un matériau composite.
